# EUROPÄISCHE PATENTSCHRIFT

(11) **EP 3 049 691 B1**
(45) Veröffentlichungstag und Bekanntmachung des Hinweises auf die Patenterteilung: **24.07.2019**
(21) Anmeldenummer: 14772058.5
(22) Anmeldetag: 29.08.2014
(51) Int. Cl.: F16F 15/14

(54) **FLIEHKRAFTPENDEL MIT ANSCHLAGDÄMPFER**
CENTRIFUGAL FORCE PENDULUM HAVING AN IMPACT DAMPER
PENDULE CENTRIFUGE PRÉSENTANT UN AMORTISSEUR D'IMPACT

(30) Priorität: 26.09.2013 DE 102013219394
(43) Veröffentlichungstag der Anmeldung: 03.08.2016
(73) Patentinhaber: Schaeffler Technologies AG & Co. KG, 91074 Herzogenaurach (DE)
(72) Erfinder: DINGER, Christian, 77855 Achern (DE)
(86) Internationale Anmeldenummer: PCT/DE2014/200432
(87) Internationale Veröffentlichungsnummer: WO 2015/043588

(56) Entgegenhaltungen:
- DE-A1-102004 011 830
- DE-A1-102011 102 812
- DE-A1-102012 219 798
- US-A1- 2012 222 515

## Beschreibung

Die Erfindung betrifft ein Fliehkraftpendel zur Verwendung in einem Antriebsstrang eines Kraftfahrzeugs. Insbesondere betrifft die Erfindung ein Fliehkraftpendel mit einem Anschlagdämpfer zur Begrenzung einer Pendelbahn einer Pendelmasse des Fliehkraftpendels.

Ein Fliehkraftpendel ist dazu eingerichtet, Drehschwingungen zu tilgen, die einer Drehbewegung einer Übertragungswelle überlagert sein können. Insbesondere im Antriebsstrang eines Kraftfahrzeugs kann ein Hubkolben-Verbrennungsmotor in unterschiedlichen Betriebszuständen Drehschwingungen erzeugen, die vorteilhafterweise getilgt werden, bevor sie über den weiteren Antriebsstrang, der beispielsweise eine Kupplung oder ein Getriebe umfassen kann, in Richtung von Antriebsrädern weiter übertragen werden. Die Drehschwingungen können auch durch Drehungleichförmigkeiten im Bereich der Antriebsräder erzeugt sein und werden vorteilhafterweise getilgt, bevor sie über den Antriebsstrang bis zum Antriebsmotor übertragen werden.

Ein Fliehkraftpendel, beispielsweise bekannt aus DE 10 2006 028 556 A1, umfasst einen Pendelflansch, der um eine Drehachse drehbar gelagert ist und eine in der Drehebene beweglich am Pendelflansch angebrachte Pendelmasse. Die Bewegung der Pendelmasse ist auf eine Pendelbahn beschränkt, die so gestaltet ist, dass die Pendelmasse Rotationsenergie aufnimmt bzw. abgibt, wenn die Drehgeschwindigkeit des Pendelflanschs um die Drehachse ansteigt bzw. abnimmt.

Aus DE 10 2004 011 830 A1 ist ein Fliehkraftpendel mit den Merkmalen des Oberbegriffs des Anspruchs 1 bekannt.

In bestimmten Betriebszuständen des Verbrennungsmotors, beispielsweise beim Beschleunigen aus einer niedrigen Drehzahl oder beim Anlassen oder Abstellen des Verbrennungsmotors, kann die Pendelmasse an eine in Umfangsrichtung benachbarte Pendelmasse anschlagen. Dadurch kann ein klapperndes oder rasselndes Geräusch verursacht sein, das von einer Person im Inneren des Kraftfahrzeugs als unangenehm empfunden werden kann. Darüber hinaus können durch das Anschlagen ein Verschleiß oder eine Beschädigung der Pendelmasse bedingt sein. Es ist daher bekannt, einen Anschlagdämpfer vorzusehen, der das Anschlagen benachbarter Pendelmassen am Pendelflansch dämpft.

Dabei sind unterschiedliche Vorschläge gemacht worden, um eine langlebige und effiziente Dämpfung des Anschlags zu erzielen. Aufgrund des begrenzten Bauraums und eines wünschenswert einfachen Aufbaus besteht jedoch nach wie vor das Problem, eine effiziente Dämpfung mit einer ausreichenden Lebensdauer des Dämpfungselements zu vereinen. Der Erfindung liegt die Aufgabe zugrunde, dieses Problem zu lösen. Die erfindungsgemäße Lösung besteht in einem Fliehkraftpendel mit den Merkmalen des unabhängigen Anspruchs. Unteransprüche geben bevorzugte Ausführungsformen wieder.

Ein erfindungsgemäßes Fliehkraftpendel umfasst einen Pendelflansch, der um eine Drehachse drehbar gelagert ist, eine in der Drehebene beweglich am Pendelflansch angebrachte Pendelmasse und einen an der Pendelmasse angebrachten Anschlagdämpfer zur Begrenzung einer Pendelbahn der Pendelmasse. Dabei ist der Anschlagdämpfer um eine eigene Achse, die parallel zur Drehachse des Pendelflanschs verläuft, drehbar gelagert.

Durch die drehbare Lagerung ist es möglich, eine Abnutzung, einen Verschleiß oder eine Beschädigung des Anschlagdämpfers auf seinen Umfang zu verteilen. Das Anschlagen des Anschlagdämpfers erfolgt stets an einem Anschlagpunkt auf seiner Oberfläche, sodass ein Drehen des Anschlagdämpfers diesen Punkt im Lauf der Zeit um die Drehachse des Anschlagdämpfers über seine Oberfläche wandern lässt. Die bezüglich eines Verschleißes effektiv zur Verfügung stehende Oberfläche des Anschlagdämpfers kann dadurch vergrößert sein. Auf diese Weise kann die Lebensdauer des Anschlagdämpfers verlängert werden. Die Anschlagpunkte können statistisch über die Oberfläche des Anschlagdämpfers gleich verteilt sein, sodass ein über den Umfang des Anschlagdämpfers gleichmäßiger Verschleiß erzielt werden kann.

Bevorzugterweise umfasst die Pendelmasse zwei Pendelelemente, die auf unterschiedlichen axialen Seiten des Pendelflanschs liegen und mittels eines axialen Bolzens miteinander verbunden sind, wobei der Anschlagdämpfer um den Bolzen drehbar gelagert ist.

Ein derartiger Aufbau der Pendelmasse aus zwei Pendelelementen ist bekannt und wohlerprobt. Durch die Anordnung des Anschlagdämpfers auf dem ohnehin erforderlichen axialen Bolzen kann der Anschlagdämpfer einfach und Platz sparend an der Pendelmasse angebracht sein.

Erfindungsgemäß ist eine Anlagefläche vorgesehen, an der der Anschlagdämpfer entlang läuft, wenn die Pendelmasse in der Drehebene bewegt wird. Gerät der drehbare Anschlagdämpfer in Eingriff mit der Anlagefläche, während die Pendelmasse bezüglich des Pendelflanschs bewegt wird, so wird ein Drehmoment bewirkt, das den Anschlagdämpfer in Drehung um seine eigene Achse versetzt. Dadurch kann ein Anschlagpunkt des Anschlagdämpfers auf seinem Umfang versetzt werden. Der Anschlagpunkt kann durch eine in der Drehebene benachbarte Pendelmasse, durch einen mit der anderen Pendelmasse verbundenen weiteren Anschlagdämpfer oder ein anderes Anschlagelement gebildet sein, das wahlweise an der anderen Pendelmasse oder am Pendelflansch befestigt ist. Durch das Drehen des Anschlagdämpfers können ein einseitiger Verschleiß und eine rasche Abnutzung verhindert werden.

Bevorzugterweise verläuft der Bolzen durch eine Aussparung im Pendelflansch, wobei die Anlagefläche einen Abschnitt der Begrenzung der Aussparung umfasst. So kann die Relativbewegung der Pendelmasse bezüglich des Pendelflanschs auf der Pendelbahn dazu ausgenutzt werden, den Anschlagdämpfer um seine eigene Achse zu drehen. In einer anderen Ausführungsform kann die Anlagefläche auch beispielsweise durch die benachbarte Pendelmasse oder ein mit ihr verbundenes Element gebildet sein.

Die Pendelbahn der Pendelmasse am Pendelflansch weist einen ersten Abschnitt auf, auf dem der Anschlagdämpfer frei drehbar ist, und einen zweiten Abschnitt, auf dem die Anlagefläche lateral in den Anschlagdämpfer eingreift. Anders ausgedrückt kann der Eingriff der Anlagefläche mit dem Anschlagdämpfer auf einen Teil der Pendelbahn beschränkt sein, während auf einem anderen Teil kein Eingriff erfolgt. Dadurch kann vermieden werden, dass der Anschlagdämpfer um gleiche Beträge vorwärts und rückwärts gedreht wird, wenn sich die Pendelmasse am Pendelflansch oszillierend bewegt. Dadurch kann verbessert sichergestellt sein, dass der Anschlagpunkt des Anschlagdämpfers entlang dessen Oberfläche versetzt wird.

In einer Ausführungsform ist die Anlagefläche bezüglich der Drehachse des Pendelflanschs nur radial innen oder nur radial außen vorgesehen. Die Pendelmasse ist auf der Pendelbahn üblicherweise radial innen und radial außen geführt, wobei zwischen den Führungen ein vorbestimmtes Spiel oder ein vorbestimmter Bewegungsraum existiert. Insbesondere kann vorgesehen sein, dass die Pendelmasse unterschiedliche Abstände von ihrer Drehachse aufweist, etwa in Abhängigkeit einer Bewegungsrichtung gegenüber dem Pendelflansch. Durch das Vorsehen der Anlagefläche nur radial innen oder nur radial außen kann sichergestellt werden, dass die Drehung des Anschlagelements nur dann erfolgt, wenn die entsprechende innere bzw. äußere radiale Führung eingreift. Bei einer oszillierenden Bewegung der Pendelmasse am Pendelflansch können insbesondere alternierend die innere und die äußere Führung eingreifen. die Abfolge zwischen freier Drehung und Drehbeschleunigung des Anschlagelements durch Eingriff der Anlagefläche kann dadurch gezielt gesteuert sein.

Ferner ist bevorzugt, dass die Pendelbahn der Pendelmasse durch die Anlage des Anschlagdämpfers an der Begrenzung der Aussparung begrenzt ist. Die Definition der Pendelbahn am Pendelflansch kann so teilweise durch den drehbaren Anschlagdämpfer übernommen werden. So kann eine Mehrfachnutzung von Elementen des Fliehkraftpendels erzielt werden, wodurch Gewicht, Material und Kosten eingespart werden können.

Es ist weiter bevorzugt, dass der Anschlagdämpfer rotationssymmetrisch um seine Achse aufgebaut ist. Dadurch kann eine gleichmäßige Verteilung des Anschlagpunkts über die Oberfläche des Anschlagdämpfers erzielt werden. Dabei umfasst der Anschlagdämpfer üblicherweise ein Elastomer oder einen Gummi, der in Form eines Rings oder eines Hohlzylinders um die Achse des Anschlagdämpfers angeordnet ist.

Zur Drehung des Anschlagdämpfers um seine Achse kann ein Lager vorgesehen sein. In einer einfachen Ausführungsform kann ein vorbestimmtes radiales Spiel zwischen dem Elastomer bzw. Gummi und einer mit der Pendelmasse verbundenen Achse, etwa des oben beschriebenen Bolzens, bestehen, so dass eine gleichmäßige Drehbarkeit des Anschlagdämpfers gewährleistet ist. In einer anderen Ausführungsform kann beispielsweise ein Kugel-, Rollen- oder Gleitlager zwischen dem Anschlagdämpfer und der Achse eingesetzt sein.

Die Erfindung wird nun mit Bezug auf die beigefügten Figuren genauer beschrieben, in denen:
- Fig. 1: eine schematische Darstellung eines Fliehkraftpendels, und
- Fig. 2: einen Anschlagdämpfer des Fliehkraftpendels von Fig. 1
darstellt.

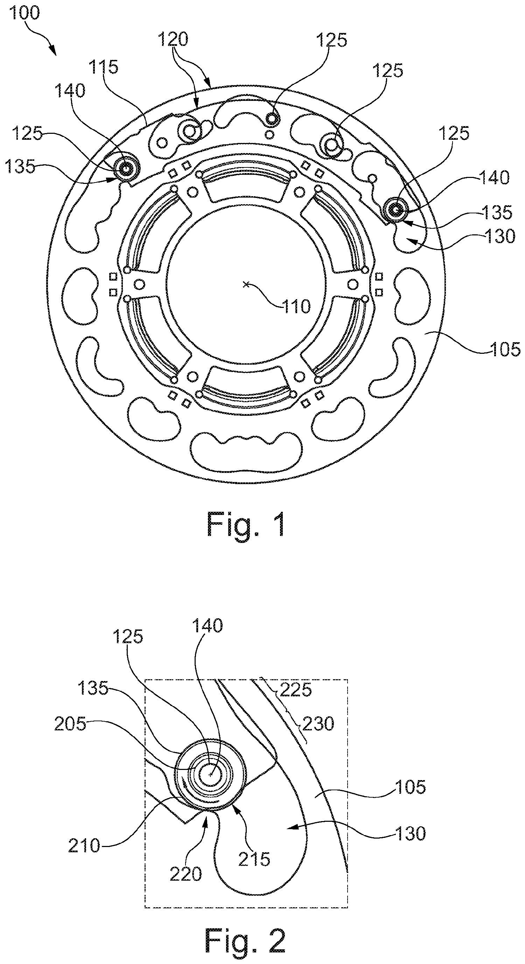

Fig. 1 zeigt ein Fliehkraftpendel 100, das insbesondere zum Einsatz im Antriebsstrang eines Kraftfahrzeugs eingerichtet ist. Das Fliehkraftpendel 100 umfasst einen Pendelflansch 105, der um eine Drehachse 110 drehbar gelagert ist, und eine Pendelmasse 115, die in der Drehebene um die Drehachse 110 verschiebbar am Pendelflansch 105 angebracht ist. Die Pendelmasse 115 ist transparent dargestellt, um ihre Lagerung am Pendelflansch 105 besser darzustellen. In der dargestellten Ausführungsform umfasst die Pendelmasse 115 zwei Pendelelemente 120, die auf unterschiedlichen axialen Seiten des Pendelflanschs 105 angebracht sind, es sind jedoch auch andere Ausführungsformen möglich, beispielsweise asymmetrisch zum Pendelflansch 105.

Die Pendelelemente 120 sind mittels eines oder mehrerer Bolzen 125 miteinander verbunden. Jeder Bolzen 125 erstreckt sich in axialer Richtung durch eine korrespondierende Aussparung 130 des Pendelflanschs 105. Dabei sind Begrenzungen der Aussparungen 130 üblicherweise so gewählt, dass die Pendelbahn der Pendelmasse 115 am Pendelflansch 105 durch Anliegen eines oder mehrerer Bolzen 125 an der Begrenzung der korrespondierenden Aussparung 130 begrenzt ist. Es ist üblich, dass sich Pendelbahnen der Pendelmasse 115 und einer weiteren, nicht dargestellten Pendelmasse 115, die in oder entgegen der Drehrichtung des Pendelflanschs 105 in Nachbarschaft zur Pendelmasse 115 liegt, überlappen. Die benachbarten Pendelmassen 115 können daher miteinander kollidieren, wenn beispielsweise der Pendelflansch 105 einer starken oder ungleichförmigen Drehschwingung ausgesetzt ist. In einer anderen Ausführungsform kann auch ein Anschlagen der Pendelmasse 115 am Pendelflansch 105 am Ende der Pendelbahn erfolgen.

Um das Anschlagen elastisch zu bedämpfen, ist wenigstens ein Anschlagdämpfer 135 vorgesehen. In der dargestellten Ausführungsform sind zwei Anschlagdämpfer 135 vorgesehen, die auf einem Umfang um die Drehachse 110 an entgegengesetzten Enden der Pendelmasse 115 liegen. Dabei ist jeder Anschlagdämpfer 135 um eine eigene Achse 140, die parallel zur Drehachse 110 des Pendelflanschs 105 verläuft, drehbar angeordnet.

Fig. 2 zeigt ein Detail des Fliehkraftpendels 100 im Bereich des Anschlagdämpfers 135. In der dargestellten, bevorzugten Ausführungsform verläuft ein Bolzen 125, der zwei Pendelelemente 120 einer Pendelmasse 115 axial miteinander verbindet, koaxial zur Drehachse 140 des Anschlagdämpfers 135. Anders ausgedrückt ist der Anschlagdämpfer 135 um den Bolzen 125 herum angeordnet. Dabei ist bevorzugt, dass der Anschlagdämpfer 135 rotationssymmetrisch ausgeführt ist. Der Anschlagdämpfer 135 kann ein Gummi oder Elastomer umfassen, das in Form eines Rings oder eines Hohlzylinders um den Bolzen 125 oder ein korrespondierendes Element herum angeordnet ist. In einer einfachen Ausführungsform ist die lichte Weite des Elastomers bzw. Gummis so bemessen, dass ein vorbestimmtes Spiel zum Bolzen 125 besteht, um die Drehbarkeit des Anschlagdämpfers 135 sicherzustellen. In einer anderen Ausführungsform ist ein Lager 205 radial zwischen dem Bolzen 125 und dem Anschlagdämpfer 135 vorgesehen. Das Lager 205 kann beispielsweise ein Kugellager, ein Gleitlager oder ein Rollenlager umfassen. In einer Ausführungsform umfasst der Anschlagdämpfer 135 ferner ein Strukturelement 210, das radial innerhalb oder radial außerhalb des Elastomers oder Gummis angeordnet ist. Das Strukturelement 210 kann beispielsweise einen Metallreifen umfassen. Radial außerhalb des Elastomers bzw. Gummis angebracht kann durch das Strukturelement 210 eine runde Form der äußeren Oberfläche des Anschlagdämpfers 135 auch bei längerem Betrieb aufrechterhalten sein. Radial innerhalb des Elastomers oder Gummis angebracht kann das Strukturelement 210 die Stabilität erhöhen oder einen belastbaren Übergang zum Lager 205 bzw. dem Bolzen 125 sicherstellen. Das Elastomer oder Gummi kann auch radial zwischen zwei Strukturelementen 210 angeordnet sein.

Ein exemplarischer Anschlagpunkt 215 kennzeichnet den Punkt an der radial äußeren Oberfläche des Anschlagdämpfers 135, an dem ein Kontakt mit einem anderen Element erfolgt, wenn die Pendelmasse 115 in Umfangrichtung anschlägt. Wird der Anschlagdämpfer 135 um seine Drehachse 140 gedreht, wandert der Anschlagpunkt 215 über seine radial äußere Oberfläche. Bei wiederholten Anschlägen kann so eine statistische Gleichverteilung der Anschlagpunkte 215 über die Oberfläche des Anschlagdämpfers 135 erzielt werden. Dies gilt auch dann, wenn der Anschlagpunkt 215 aus anderen Gründen als durch Drehung des Anschlagdämpfers 135 seine Position ändert, beispielsweise weil ein anschlagendes Element an einer benachbarten Pendelmasse angebracht ist, deren Abstand zur Drehachse 110 veränderlich ist.

Um das Drehen des Anschlagdämpfers 135 zu gewährleisten, ist eine Anlagefläche 220 vorgesehen, an der der Anschlagdämpfer 135 entlangläuft, wenn die Pendelmasse 115 auf ihrer Pendelbahn bezüglich des Pendelflanschs 105 bewegt wird. Bevorzugterweise wird der Anschlagdämpfer 135 gedreht, wenn er sich in einer Bewegung in Richtung Kollision befindet, alternativ dazu kann er jedoch auch auf seinem Rückweg von der Kollision gedreht werden. Die Anlagefläche 220 wird in der dargestellten Ausführungsform durch einen Abschnitt der Begrenzung der Aussparung 130 im Pendelflansch 105 gebildet. In einer anderen Ausführungsform kann die Anlagefläche 220 jedoch auch durch ein anderes Element gebildet werden, beispielsweise durch einen Anschlagdämpfer 135 an der benachbarten Pendelmasse 115.

Die Anlagefläche 220 ist bevorzugterweise so vorgesehen, dass die Pendelbahn einen ersten Abschnitt 225 umfasst, auf dem sich der Anschlagdämpfer 135 um seine Drehachse 140 frei drehen kann, und einen zweiten Abschnitt 230, auf dem die Anlagefläche 220 in lateralen Eingriff mit der radial äußeren Oberfläche des Anschlagdämpfers 135 ist.

Die Pendelbahn der Pendelmasse 115 erlaubt eine vorbestimmte radiale Bewegung der Pendelmasse 115. Dies ist dadurch sichergestellt, dass einander in radialer Richtung gegenüberliegende Abschnitte von Begrenzungen der Aussparung 130 weiter voneinander entfernt sind als der Durchmesser des Anschlagdämpfers 135 beträgt. Dabei ist die Anlagefläche 220 bevorzugterweise nur auf der radialen Innenseite oder der radialen Außenseite des Anschlagdämpfers 135 vorgesehen. Dadurch kann sichergestellt werden, dass bei einer oszillierenden Bewegung der Pendelmasse 115 bezüglich des Pendelflanschs 105 ein Eingriff zwischen der Anlagefläche 220 und dem Anschlagdämpfer 135 nur auf Teilen der Bewegungsbahn erfolgt, sodass die Drehung des Anschlagdämpfers 135 immer wieder kurz bewirkt und dann wieder unterbrochen wird. Dadurch kann ein intermittierendes Drehen des Anschlagdämpfers 135 bewirkt werden, der eine statistische Gleichverteilung der Anschlagpunkte 215 auf dem äußeren Umfang des Anschlagdämpfers 135 unterstützt.

### Bezugszeichenliste

- 100: Fliehkraftpendel
- 105: Pendelflansch
- 110: Drehachse
- 115: Pendelmasse
- 120: Pendelelement
- 125: Bolzen
- 130: Aussparung
- 135: Anschlagdämpfer
- 140: Drehachse des Anschlagdämpfers

- 205: Lager
- 210: Strukturelement
- 215: Anschlagpunkt
- 220: Anlagefläche
- 225: erster Abschnitt der Pendelbahn
- 230: zweiter Abschnitt der Pendelbahn

## Patentansprüche

1. Fliehkraftpendel (100), umfassend:
- einen Pendelflansch (105), der um eine Drehachse (110) drehbar gelagert ist;
- eine in der Drehebene beweglich am Pendelflansch (105) angebrachte Pendelmasse (115);
- einen an der Pendelmasse (115) angebrachten Anschlagdämpfer (135) zur Begrenzung einer Pendelbahn der Pendelmasse (115),
wobei
- der Anschlagdämpfer (135) um eine eigene Achse (140), die parallel zur Drehachse (110) des Pendelflanschs (105) verläuft, drehbar gelagert ist, **dadurch gekennzeichnet, dass** eine Anlagefläche (220) vorgesehen ist, an der der Anschlagdämpfer (135) entlang läuft, wenn die Pendelmasse (115) in der Drehebene bewegt wird, wobei die Pendelbahn der Pendelmasse (115) am Pendelflansch (105) einen ersten Abschnitt (225) umfasst, auf dem der Anschlagdämpfer (135) frei drehbar ist, und einen zweiten Abschnitt (230), auf dem die Anlagefläche (220) lateral in den Anschlagdämpfer (135) eingreift, womit der Anschlagpunkt des Anschlagdämpfers entlang dessen Oberfläche versetzt wird.

2. Fliehkraftpendel (100) nach Anspruch 1, wobei die Pendelmasse (115) zwei Pendelelemente (120) umfasst, die auf unterschiedlichen axialen Seiten des Pendelflanschs (105) liegen und mittels eines axialen Bolzens (125) miteinander verbunden sind, und der Anschlagdämpfer (135) um den Bolzen (125) drehbar gelagert ist.

3. Fliehkraftpendel (100) nach Anspruch 1,
wobei der Bolzen (125) durch eine Aussparung (130) im Pendelflansch (105) verläuft, und die Anlagefläche (220) einen Abschnitt der Begrenzung der Aussparung (130) umfasst.

4. Fliehkraftpendel (100) nacheinem der vorangehenden Ansprüche, wobei die Anlagefläche (220) bezüglich der Drehachse (110) des Pendelflanschs (105) nur radial innen oder nur radial außen vorgesehen ist.

5. Fliehkraftpendel (100) nach einem der vorangehenden Ansprüche, wobei die Pendelbahn durch die Anlage des Anschlagdämpfers (135) an der Begrenzung der Aussparung (130) begrenzt ist.

6. Fliehkraftpendel (100) nach einem der vorangehenden Ansprüche, wobei der Anschlagdämpfer (135) rotationssymmetrisch um seine Achse (140) aufgebaut ist.

7. Fliehkraftpendel (100) nach einem der vorangehenden Ansprüche, wobei ein Lager (205) zur Drehung des Anschlagdämpfers (135) um seine Achse (140) vorgesehen ist.

## Claims

1. Centrifugal force pendulum (100), comprising:
- a pendulum flange (105) which is mounted such that it can be rotated about a rotational axis (110);
- a pendulum mass (115) which is attached to the pendulum flange (105) such that it can be moved in the rotational plane;
- a stop damper (135) which is attached to the pendulum mass (115) for limiting a pendulum path of the pendulum mass (115),
- the stop damper (135) being mounted such that it can be rotated about its own axis (140) which runs parallel to the rotational axis (110) of the pendulum flange (105), **characterized in that** a bearing face (220) is provided, along which the stop damper (135) runs when the pendulum mass (115) is moved in the rotational plane, the pendulum path of the pendulum mass (115) on the pendulum flange (105) comprising a first section (225), on which the stop damper (135) can be rotated freely, and a second section (230), on which the bearing face (220) engages laterally into the stop damper (135), whereby the stop point of the stop damper is moved along its surface.

2. Centrifugal force pendulum (100) according to Claim 1, the pendulum mass (115) comprising two pendulum elements (120) which lie on different axial sides of the pendulum flange (105) and are connected to one another by means of an axial pin (125), and the stop damper (135) being mounted such that it can be rotated about the pin (125).

3. Centrifugal force pendulum (100) according to Claim 1, the pin (125) running through a cut-out (130) in the pendulum flange (105), and the bearing face (220) comprising a section of the border of the cut-out (130).

4. Centrifugal force pendulum (100) according to one of the preceding claims, the bearing face (220) being provided merely radially on the inside or merely radially on the outside with regard to the rotational axis (110) of the pendulum flange (105).

5. Centrifugal force pendulum (100) according to one of the preceding claims, the pendulum path being limited by way of the contact of the stop damper (135) with the boundary of the cut-out (130).

6. Centrifugal force pendulum (100) according to one of the preceding claims, the stop damper (135) being of rotationally symmetrical construction about its axis (140).

7. Centrifugal force pendulum (100) according to one of the preceding claims, a bearing (205) for rotating the stop damper (135) about its axis (140) being provided.

## Revendications

1. Pendule centrifuge (100), comprenant:
- une bride de pendule (105), qui est supportée de façon rotative autour d'un axe de rotation (110);
- une masse pendulaire (115) montée sur la bride de pendule (105) de façon mobile dans le plan de rotation;
- un amortisseur de butée (135) monté sur la masse pendulaire (115) pour limiter une trajectoire pendulaire de la masse pendulaire (115),
dans lequel
- l'amortisseur de butée (135) est supporté de façon rotative autour d'un axe propre (140), qui s'étend parallèlement à l'axe de rotation (110) de la bride de pendule (105),
**caractérisé en ce qu'**il est prévu une face d'appui (220), le long de laquelle l'amortisseur de butée (135) roule lorsque la masse pendulaire (115) se déplace dans le plan de rotation, dans lequel la trajectoire pendulaire de la masse pendulaire (115) sur la bride de pendule (105) comprend une première partie (225), sur laquelle l'amortisseur de butée (135) peut tourner librement, et une seconde partie (230), sur laquelle la face d'appui (220) s'engage latéralement dans l'amortisseur de butée (135), le point de butée de l'amortisseur de butée étant ainsi déplacé le long de sa surface.

2. Pendule centrifuge (100) selon la revendication 1, dans lequel la masse pendulaire (115) comprend deux éléments pendulaires (120), qui sont situés sur des côtés axiaux différents de la bride de pendule (105) et qui sont reliés l'un à l'autre au moyen d'un boulon axial (125), et l'amortisseur de butée (135) est supporté de façon rotative autour du boulon (125) .

3. Pendule centrifuge (100) selon la revendication 1, dans lequel le boulon (125) s'étend à travers une découpe (130) dans la bride de pendule (105), et la face d'appui (220) comprend une partie de la délimitation de la découpe (130).

4. Pendule centrifuge (100) selon l'une quelconque des revendications précédentes, dans lequel la face d'appui (220) n'est prévue que radialement à l'intérieur ou que radialement à l'extérieur par rapport à l'axe de rotation (110) de la bride de pendule (105).

5. Pendule centrifuge (100) selon l'une quelconque des revendications précédentes, dans lequel la trajectoire pendulaire est limitée par l'appui de l'amortisseur de butée (135) sur la délimitation de la découpe (130).

6. Pendule centrifuge (100) selon l'une quelconque des revendications précédentes, dans lequel l'amortisseur de butée (135) est réalisé de façon symétrique en rotation autour de son axe (140).

7. Pendule centrifuge (100) selon l'une quelconque des revendications précédentes, dans lequel il est prévu un palier (205) pour la rotation de l'amortisseur de butée (135) autour de son axe (140).
